# EUROPEAN PATENT SPECIFICATION

(11) **EP 2 449 139 B1**
(45) Date of publication and mention of the grant of the patent: **23.11.2016**
(21) Application number: 10791667.8
(22) Date of filing: 10.06.2010
(51) Int. Cl.: C22B 3/08, C22B 15/00, C22B 1/00

(54) **METHOD FOR LEACHING CHALCOPYRITE CONCENTRATE**
VERFAHREN ZUR LAUGUNG EINES CHALCOPYRIT-KONZENTRATS
PROCÉDÉ DE LIXIVIATION D'UN CONCENTRÉ DE CHALCOPYRITE

(30) Priority: 26.06.2009 FI 20090251
(43) Date of publication of application: 09.05.2012
(73) Proprietor: Outotec Oyj, 02230 Espoo (FI)
(72) Inventor: RUONALA, Mikko, FI-02460 Kantvik (FI); LEPPINEN, Jaakko, FI-02230 Espoo (FI); TIIHONEN, Jari, FI-28330 Pori (FI)
(74) Representative: Kolster Oy Ab
(86) International application number: PCT/FI2010/050484
(87) International publication number: WO 2010/149841

(56) References cited:
- WO-A1-97/12070
- DE-C- 895 530
- US-A- 3 868 439
- US-A- 3 891 522
- US-A1- 2005 269 208
- US-A1- 2009 078 086
- BEREZOWSKY R M ET AL: "PRESSURE LEACHING LAS CRUCES COPPER ORE", JOM, SPRINGER NEW YORK LLC, UNITED STATES, vol. 51, no. 12, 1 December 1999 (1999-12-01), pages 36-40, XP000902961, ISSN: 1047-4838, DOI: 10.1007/S11837-999-0170-Z

## Description

### FIELD OF THE INVENTION

The invention relates to a method for leaching bulk concentrate of a chalcopyrite type by means of an aqueous solution containing sulphuric acid and oxygen feed under atmospheric pressure and at a temperature between 75°C and the boiling point of the solution. It is typical of the method that the particle size of the concentrate to be fed to leaching is in the region of 80 % below 60 - 100 µm and that the concentrate is leached with a solution with an acid concentration that is regulated to be in the region of 20 - 90 g/l.

### BACKGROUND OF THE INVENTION

One copper sulphide mineral is chalcopyrite, CuFeS₂, from which copper recovery has conventionally taken place pyrometallurgically. If it is wished to leach chalcopyrite concentrate, the most typical method has been pressure leaching and even in some cases bioleaching. Pressure leaching is a fairly expensive process and bioleaching is slow. Generally it is known that chalcopyrite easily becomes passive in atmospheric sulphuric acid leaching and for that reason yields remain relatively low.

A leaching method of at least to some extent iron-containing sulphide mineral known as the Albion process is disclosed in US patent 5,993,635. One essential characteristic of the process is milling (P80 20 microns or less), after which leaching of the sulphide mineral is performed in atmospheric conditions i.e. at ambient pressure and a temperature between 60° C and the boiling point of the solution. It is characteristic of the leaching process that it takes place using a solution containing sulphuric acid and trivalent iron and by feeding oxygen into the leaching stage. The sulphuric acid concentration of the solution when leaching chalcopyrite is in the region of 30 - 40 g/l. The iron used in leaching is obtained largely by leaching the pyrite contained in the sulphide mineral. The valuable metal to be leached according to the examples is copper, nickel, cobalt or zinc. The acidic sulphate solution containing the dissolved valuable metal is routed next to neutralisation and iron precipitation. Neutralisation and iron precipitation are carried out with limestone. The solution purification of the valuable metal-containing sulphate solution is performed by solvent extraction and metal recovery by electrowinning.

The copper mineral leaching process disclosed in US patent 5,917,116 is based on fine grinding and low-temperature (below 100°C) pressure leaching with the oxygen pressure at about 10 bar. The sulphuric acid concentration of the leaching stage is around 100 - 120 g/l, oxygen and, in addition, 2-10 g/l of chlorides, are fed into leaching.

A copper concentrate leaching method is disclosed in US application 2005/269208, which operates in atmospheric conditions at a temperature of 50 - 120°C and where the concentrate is fed into leaching at a normal degree of grinding (e.g. P80 below 106 microns), but the essential feature of the process is the feed of pyrite into leaching. The ratio of chalcopyrite to pyrite is specified as being between 4:1 and 1:20. The method operates in conditions where the pyrite does not dissolve, and the redox is in the region of 350 - 520 mV vs. Ag/AgCl. According to example 6, the leaching result improved dramatically when the acid concentration was raised from a value of 20 g/l to a value of 30 g/l, but the reason for this is not known.

WO publication 2007/093667 describes a method for recovering copper from an ore containing copper sulphide and pyrite. The ore is ground to normal fineness (95-100% below 150 microns) and is leached with an acid-containing solution, in which the amount of iron is 20 - 70 g/l, copper 8-12 g/l and sulphuric acid at least 20 g/l. It is mentioned in the specification section that the method is intended particularly for the leaching of chalcocite-type (Cu₂S) copper sulphide pyrite ore.

A countercurrent leaching method for recovering copper from sulfidic ores by means of a two-step leaching process, using sulfuric acid, is known from DE 895 530 C.

### PURPOSE OF THE INVENTION

One essential feature of the chalcopyrite leaching methods disclosed in the prior art is fine grinding in order to prevent passivation of the chalcopyrite. However, one significant drawback of fine grinding is sludge build-up and, in consequence, the considerable slowing down of the post-leaching liquid-solids separation. Additionally, fine grinding increases the operating expenses of the process. The purpose of the invention presented here is to eliminate the drawbacks described above.

### SUMMARY OF THE INVENTION

The essential features of the invention will be made apparent in the attached claims.

The invention relates to a method for leaching chalcopyrite concentrate , according to claim 1, by means of an aqueous solution containing sulphuric acid and an oxygen feed at atmospheric pressure and at a temperature between 75°C and the boiling point of the solution. It is typical of the method that the particle size of the concentrate to be fed to leaching is in the region of 80 % below 60 - 100 µm and that the concentrate is leached with an aqueous solution, the acid concentration of which is regulated to be around 20 - 90 g/l. According to one preferred embodiment, the acid concentration of the aqueous solution is regulated to be around 40 - 70 g/l.

According to one preferred embodiment of the invention, the concentrate is subjected to a short purification milling before leaching in order to clean the mineral surfaces.

The method accordant with the invention relates typically to a chalcopyrite concentrate, which is a bulk concentrate including zinc sulphide.

According to one embodiment of the invention, leaching is carried out as two-stage countercurrent leaching. In this case, the chalcopyrite concentrate is fed into a weak acid leaching stage, in which it is leached with the leach solution exiting a strong acid leaching stage. The acid concentration of the copper sulphate solution removed from the weak acid leaching stage is regulated to the range of 5 - 15 g/l and the solution is routed to solution purification and on to electrowinning to produce pure copper. The residue of the weak acid leaching stage is fed into the strong acid leaching stage, in which the residue is leached with the raffinate from solution purification, the acid concentration of which is regulated to be 20 - 90 g/l and where the solution that is formed is fed into the weak acid leaching stage. According to one preferred embodiment of the invention, the acid concentration of the solution in the strong acid leaching stage is regulated to be in the region of 40 - 70 g/l.

### LIST OF DRAWINGS

Figure 1 is a diagram of one chalcopyrite concentrate leaching process accordant with the invention,
Figure 2 is a graph of the metal leaching yield and acid concentration as a function of time in accordance with example 1,
Figure 3 is a graph of the metal leaching yield and acid concentration as a function of time in accordance with example 2, and
Figure 4 is a graph of the metal leaching yield and acid concentration as a function of time in accordance with example 3.

### DETAILED DESCRIPTION OF THE INVENTION

The purpose of the method now developed is to leach chalcopyritic bulk concentrate at atmospheric pressure and at a temperature that is at least 75°C and a maximum of the boiling point of the aqueous solution used for concentrate leaching. The concentrate is typically a flotation concentrate, with a copper content of around 10 - 30 wt %. Leaching may be performed directly on the concentrate, when a typical concentrate fineness is around 80 % below 60 - 100 µm. However, before leaching, it is advantageous to perform a short "purification milling", not with the aim of obtaining a major degree of grinding, but rather to clean the mineral surfaces. Unlike the methods disclosed in the prior art, leaching can consequently operate at a particle size range of P80 > 20 µm.

When leaching is performed without fine grinding, the following benefits are achieved: firstly grinding and energy costs are saved and secondly there is no sludge build-up during leaching, which has a significant effect on liquid/solids separation after leaching. Bulk concentrate is a term used to mean that in addition to copper as a sulphidic valuable metal in the concentrate, there is also a variable amount of zinc. Zinc is in the concentrate as zinc sulphide i.e. mostly as sphalerite mineral ZnS. Leaching takes place with an acidic aqueous solution with a sulphuric acid concentration of around 20 - 90 g/l, but preferably 40 - 75 g/l. In addition, an oxygen-containing gas is fed into the leaching stage, which may be air, oxygen-enriched air, or oxygen. The iron dissolved from the chalcopyrite is oxidised to trivalent form (Fe³⁺) by means of the acid and oxygen-containing gas, and in turn this promotes the dissolution of copper and zinc sulphides into sulphates.

It was found in the tests carried out that both copper and zinc dissolve well, even though the copper and iron concentration of the solution used for leaching is relatively low at the start of leaching. Likewise, it was also observed that a leaching time of about 20 h enables a yield of 95 - 98% with both copper and zinc. The poor dissolution of chalcopyrite is generally held to be due to the fact that the mineral surfaces of chalcopyrite are covered by the sulphur generated in leaching, but this phenomenon was not observed in the tests that were performed. If lead, silver or gold are also present in the concentrate, they remain in the leaching residue and can be recovered from it. The copper sulphate solution formed in leaching is purified of impurities by means of solvent extraction or cementation, for example. In the case of extraction, metallic copper is recovered from the pure copper sulphate solution electrolytically. The acid concentration of the copper sulphate solution generated in leaching is so high that the solution must be neutralised before being routed to extraction. Typical neutralising agents are calcium-and sodium-based alkalis such as limestone, burnt lime, slaked lime and sodium hydroxide. In their place, ground copper ore or copper concentrate can be used as the neutralising agent. One preferred neutralising agent is a zinc-containing material such as zinc calcine, oxidic zinc ore or zinc-containing dust. When leaching is performed as countercurrent leaching in the way described below, neutralisation of the copper sulphate solution takes place partially by means of concentrate fed into the process.

As for zinc, it can be recovered for instance from a side stream after iron removal either by purifying the zinc-containing solution using conventional solution purification or by extracting the zinc selectively using solvent extraction. Zinc is recovered from the purified zinc sulphate solution electrolytically. Electrolytic zinc removal takes place either by routing the purified zinc solution to the electrolyte after conventional solution purification or by stripping the zinc from the extractant into the electrolyte solution. It is also possible to recover zinc for example as zinc sulphate or some other zinc compounds, either directly from the raw solution or from the solution exiting extraction.

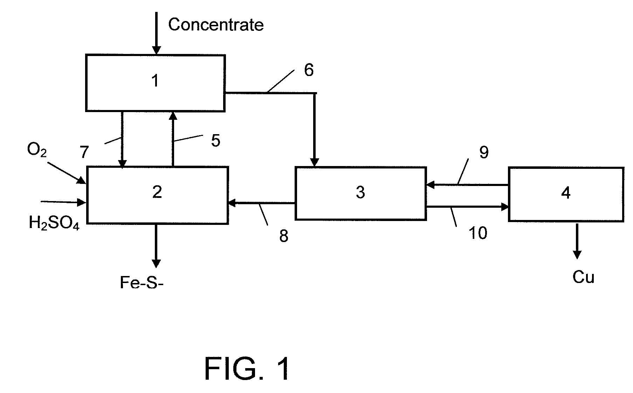

One preferred method for leaching concentrate is to perform leaching as countercurrent leaching, which consists of a weak acid leaching stage and a strong acid leaching stage. The flowsheet of this process alternative is presented in Figure 1. Accordingly, the concentrate is fed into the first or weak acid leaching stage 1, into which leaching solution 5 is routed from the second leaching stage 2. The acid concentration of the leaching solution 5 to be fed into the first leaching stage 1 is fairly high, 40 - 70 g/l, but it is neutralised by the concentrate fed in so that the acid concentration of zinc-containing copper sulphate solution 6 removed from leaching is regulated to be in the region of 5 - 15 g/l. About a quarter of the copper in the concentrate dissolves in the first leaching stage and somewhat more of the zinc. Obviously, solids/liquid separation is carried out between the stages, but it is not shown in detail in the flowsheet. Since the concentrate to be leached is not subjected to fine grinding, sludge build-up does not cause problems in liquid/solids separation. The copper sulphate solution from the first stage of leaching is routed to solution purification, which in this case is preferably solvent extraction (SX) 3. Iron removal takes place either after leaching and before copper extraction or from a side stream before zinc extraction.

The treatment of the residue 7 of the first leaching stage is continued in the second or concentrated acid leaching stage 2, in which the residue is leached with a raffinate 8 from the extraction 3. The acid concentration of said raffinate is regulated with the addition of acid to be in the region of 40 - 70 g/L. Oxygen-containing gas is also fed into the solution. Leaching time is 12 - 24 h depending on the concentrate, during which time acid is added when necessary so that the acid concentration of the solution remains more or less the same. The solution 5 of the second leaching stage, which is routed to the first leaching stage, contains almost all the copper (92-98%) and zinc (98-99%) contained in the concentrate. Neutralisation of the solution for extraction takes place in the first stage by means of fresh concentrate.

The residue of the second leaching stage is a sulphur- and iron-containing residue, and its further treatment depends on the amount of valuable metals in the residue. Valuable metals are for instance silver and gold, which are recovered by known methods.

The solution purification of the copper sulphate solution coming from the leaching stages is carried out according to the flowsheet by means of solvent extraction 3, in which the copper of the aqueous solution is transferred in the extraction stage to an organic extraction solution. In the stripping stage, copper is transferred from the organic solution to an acidic aqueous solution i.e. to weak electrolyte 9 exiting post-extraction electrowinning 4. After stripping, the copper-containing aqueous solution 10 is routed to electrowinning, from where metallic copper is obtained as the end product.

The copper of the chalcopyrite concentrate dissolves according to the following reactions:

4FeSO₄ + 2H₂SO₄ + O₂ -> 2Fe₂(SO₄)₃ + 2H₂O (1)

CuFeS₂ + 2Fe₂(SO₄)₃ -> CuSO₄ + 5FeSO₄ + 2S (2)

The sum reaction is:

CuFeS₂ + 2H₂SO₄ + O₂ -> CuSO₄ + FeSO₄ + 2H₂O + 2S (3)

The zinc of the concentrate dissolves according to the following reactions:

4FeSO₄ + 2H₂SO₄ + O₂ -> 2Fe₂(SO₄)₃ + 2H₂O (4)

ZnS + Fe₂(SO₄)₃ -> ZnSO₄ + 2FeSO₄ + S (5)

The sum reaction is:

2ZnS + 2H₂SO₄ + O₂ -> 2ZnSO₄ + 2H₂O + 2S (6)

The method accordant with the invention is described further with the examples below.

### EXAMPLES

The leaching tests of the examples were performed in a single stage, whereby the leaching corresponds to the strong acid leaching stage in flowsheet 1 into which the concentrate is routed. Since the key purpose of the tests was to ensure that the chalcopyrite dissolved, the solutions were not neutralised for extraction in a weak acid leaching stage as described above.

### Example 1

Atmospheric leaching of a coarse chalcopyritic copper concentrate was performed at a sulphuric acid concentration of 40-90 g/l and constant oxygen feed at a temperature of 95°C. Table 1 shows the particle size distribution of the concentrate. The main components of the copper concentrate were Cu 28.5 wt %, Fe 28.9 wt % and Zn 3.3 wt %. The original concentrations of the leaching solution were 1 g/l of Cu and 10 g/l of Fe. The iron was added as ferrous iron. Zinc was not added. The final solution concentrations were 25.0 g/l of Cu, 32.6 g/l of Fe and 3.1 g/l of Zn.

**Table 1.**

| Screen size | | Passing |
|---|---|---|
| mesh | mm | % |
| 100 | 0.149 | 97.50 |
| 140 | 0.105 | 88.18 |
| 200 | 0.074 | 74.53 |
| 270 | 0.053 | 54.76 |
| 400 | 0.037 | 44.22 |
| | 0.020 | 29.65 |

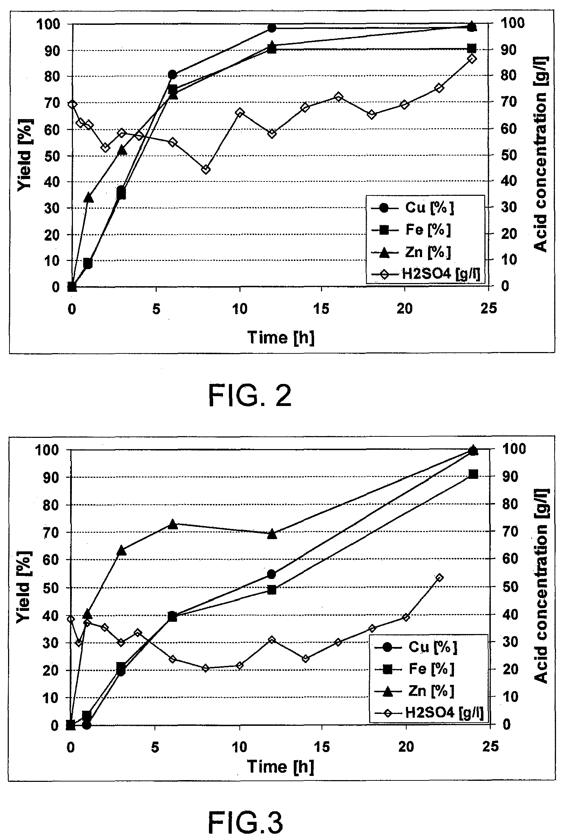

The graphs in Figure 2 show that when the sulphuric acid concentration of the leaching solution was kept fairly high, at 40 - 90 g/l, both copper and zinc dissolved fairly quickly. After 12 hours 98% of the copper had dissolved and about 92% of the zinc. After 20 hours the yield of zinc into solution was also around 95%.

### Example 2

In accordance with Table 1, coarse chalcopyritic copper concentrate was leached at atmospheric pressure, so that the sulphuric acid concentration of the leaching solution was 20-40 g/l. A constant amount of oxygen was fed into leaching at a temperature of 95°C. The main components of the copper concentrate were Cu 28.5 wt %, Fe 28.9 wt % and Zn 3.3 wt %. The original concentrations of the solution were 1 g/l of Cu and 10 g/l of Fe. The iron was added as ferrous iron. Zinc was not added. The final solution concentrations were 27.5 g/l of Cu, 33.7 g/l of Fe and 3.2 g/l of Zn. As shown in graph 3, a copper leaching yield of over 95% now requires a residence time of 24 hours. The zinc leaching yield is at the same level as the copper yield.

### Example 3

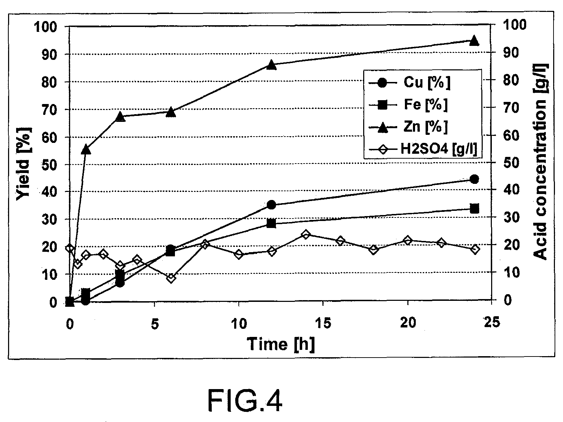

In accordance with Table 1, coarse chalcopyritic copper concentrate was leached at atmospheric pressure, so that the sulphuric acid concentration of the leaching solution was 10-20 g/l. A constant amount of oxygen was fed into leaching at a temperature of 95°C. The main components of the copper concentrate were Cu 28.5 wt %, Fe 28.9 wt % and Zn 3.3 wt %. The original concentrations of the solution were 1 g/l of Cu and 10 g/l of Fe. The iron was added as ferrous iron. Zinc was not added. The final solution concentrations were 12.7 g/l of Cu, 17.8 g/l of Fe and 3.4 g/l of Zn. The graphs in Figure 4 show that the copper leaching rate was extremely low, since a residence time of 24 hours achieved a yield of only a little over 40%. In this case too, the zinc yield was over 90%.

Figures 2 - 4 also include yield graphs for iron, which mostly follow the copper yield graphs, which indicates that the majority of the iron in the chalcopyrite ends up in the solution in these conditions and is exploited in the leaching of copper and zinc.

## Claims

1. A method for leaching chalcopyrite concentrate by means of sulphuric acid-containing aqueous solution and oxygen feed at atmospheric pressure and a temperature between 75°C and the boiling point of the solution, **characterised in that** leaching is performed as two-stage countercurrent leaching wherein the particle size of the concentrate to be fed into a first leaching stage (1) is in the region of 80% below 60 - 100 µm,
the concentrate is leached in the first leaching stage (1) with a leach solution (5) exiting from a second leaching stage with acid concentration in the region of 40-70 g/l (2) for forming a copper sulphate solution (6) having acid concentration regulated to the region of 5-15 g/l;
a residue (7) of the first leaching stage (1) is fed into the second leaching stage (2), where the residue is leached with a raffinate (8) the acid concentration of which is regulated to be 20 - 90 g/l.

2. A method according to claim 1, **characterised in that** before leaching the concentrate is subjected to a purification milling in order to clean the mineral surfaces.

3. A method according to claim 1, **characterised in that** the chalcopyrite concentrate is a bulk concentrate, which includes zinc sulphide.

4. A method according to claim 1, **characterised in that,** the copper sulphate solution (6) to be removed from the first leaching stage is routed to solution purification (3) and on to electrowinning (4) to produce pure copper.

5. A method according to claim 1, **characterised in that** the acid concentration of the second leaching stage solution (5) is regulated to be in the region of 40 - 70 g/l.

## Patentansprüche

1. Verfahren zur Auslaugung von Chalcopyrit-Konzentrat mittels einer Schwefelsäure enthaltenden wässrigen Lösung und einer Sauerstoffeinspeisung bei atmosphärischen Druck und einer Temperatur zwischen 75°C und dem Siedepunkt der Lösung, **gekennzeichnet dadurch, dass** die Auslaugung als Zwei-Stufen-Gegenstromauslaugung durchgeführt wird, wobei die Teilchengröße des in die erste Auslaugungsstufe (1) einzuspeisenden Konzentrats in einem Bereich von 80% unterhalb 60-100 µm ist,
das Konzentrat in der ersten Auslaugungsstufe (1) mit einer Auslauglösung (5) ausgelaugt wird, die aus einer zweiten Auslaugungsstufe austritt, mit einer Säurekonzentration in einem Bereich von 40-70 g/l (2), um eine Kupfer-Sulfat-Lösung (6) mit einer in dem Bereich von 5-15 g/l eingestellten Säurekonzentration zu bilden;
ein Rückstand (7) der ersten Auslaugungsstufe (1) in die zweite Auslaugungsstufe (2) eingespeist wird, wobei der Rückstand mit einem Raffinat (8) ausgelaugt wird, in dem die Säurekonzentration auf 20-90 g/l eingestellt ist.

2. Verfahren gemäß Anspruch 1, **dadurch gekennzeichnet, dass** das Konzentrat vor der Auslaugung einem Reinigungsmahlen unterworfen wird, um die Mineraloberflächen zu reinigen.

3. Verfahren gemäß Anspruch 1, **dadurch gekennzeichnet, dass** das Chalcopyrit-Konzentrat ein Rohkonzentrat ist, dass Zinksulfid einschließt.

4. Verfahren gemäß Anspruch 1, **dadurch gekennzeichnet, dass** die aus der ersten Auslaugungsstufe zu entfernende Kupfer-Sulfat-Lösung an eine Lösungsreinigung (3) und weiter an eine Elektrogewinnung (4), um reines Kupfer herzustellen, geleitet wird.

5. Verfahren gemäß Anspruch 1, **dadurch gekennzeichnet, dass** die Säurekonzentration der zweiten Auslaugungsstufe-Lösung (5) in einem Bereich von 40-70 g/l eingestellt wird.

## Revendications

1. Procédé pour la lixiviation d'un concentré de chalcopyrite au moyen d'une solution aqueuse contenant de l'acide sulfurique et d'une alimentation en oxygène à pression atmosphérique et à une température comprise entre 75°C et le point d'ébullition de la solution, **caractérisé en ce que** la lixiviation est effectuée par lixiviation à contre-courant à deux étapes dans lequel la taille des particules du concentré devant être introduit dans une première étape de lixiviation (1) se trouve dans la plage de 80% en dessous de 60-100 µm,
le concentré est lixivié dans la première étape de lixiviation (1) avec une solution de lixiviation (5) sortant d'une deuxième étape de lixiviation avec une concentration en acide dans la plage de 40-70 g/l (2) pour former une solution de sulfate de cuivre (6) ayant une concentration en acide régulée à une plage de 5-15 g/l;
un résidu (7) de la première étape de lixiviation (1) est introduit dans la deuxième étape de lixiviation (2), où le résidu est lixivié avec un raffinat (8) dont la concentration en acide est régulée pour être 20-90 g/l.

2. Procédé selon la revendication 1, **caractérisé en ce qu'**avant la lixiviation le concentré est soumis à un broyage de purification afin de nettoyer les surfaces du minéral.

3. Procédé selon la revendication 1, **caractérisé en ce que** le concentré de chalcopyrite est un concentré brut, qui comprend du sulfure de zinc.

4. Procédé selon la revendication 1, **caractérisé en ce que**, la solution de sulfate de cuivre (6) destinée à être retirée de la première étape de lixiviation est acheminée vers une purification de solution (3) et sur une extraction électrolytique (4) pour produire du cuivre pur.

5. Procédé selon la revendication 1, **caractérisé en ce que** la concentration en acide de la solution (5) de la deuxième étape de lixiviation est régulée pour être dans la plage de 40-70 g/l.
